# EUROPEAN PATENT SPECIFICATION

(11) **EP 0 862 066 B1**
(45) Date of publication and mention of the grant of the patent: **25.08.2004**
(21) Application number: 98200165.3
(22) Date of filing: 22.01.1998
(51) Int. Cl.: G01T 1/29

(54) **Method for readout af a stimulable phosphor screen**
Verfahren zum Auslesen einer stimulierbaren Phosphorplatte
Dispositif pour la réproduction d'images dans un écran luminescent stimulable

(30) Priority: 31.01.1997 EP 97200267
(43) Date of publication of application: 02.09.1998
(73) Proprietor: AGFA-GEVAERT, 2640 Mortsel (BE)
(72) Inventor: Struye, Luc, 2640 Mortsel (BE); Leblans, Paul, 2640 Mortsel (BE); Willems, Peter, 2640 Mortsel (BE)

(56) References cited:
- EP-A- 0 598 949
- US-A- 4 814 617
- US-A- 4 876 452
- US-A- 4 880 987
- US-A- 4 983 834

## Description

### FIELD OF THE INVENTION

The present invention is in the field of digital radiography and more specifically relates to a method for readout of an image stored in a stimulable phosphor plate.

### BACKGROUND OF THE INVENTION

In radiography the interior of objects is reproduced by means of penetrating radiation which is high energy radiation also known as ionizing radiation belonging to the class of X-rays, gamma-rays and high-energy elementary particle radiation e.g. beta-rays, electron beam or neutron radiation. For the conversion of penetrating radiation into visible light and/or ultraviolet radiation luminescent substances called phosphors are used.

In a conventional radiographic system an X-ray radiograph is obtained by X-rays transmitted imagewise through an object and which are converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said screen irradiates a contacting photographic silver halide emulsion layer film which after exposure is developed to form therein a silver image in conformity with the X-ray image.

More recently as described e.g. in US-P 3,859,527 an X-ray recording system has been developed wherein photostimulable storage phosphors are used having in addition to their immediate light emission (prompt emission) on X-ray irradiation the property to store temporarily a large part of the X-ray energy. Said energy is set free by photostimulation in the form of fluorescent light different in wavelength from the light used in the photostimulation. In said X-ray recording system the stimulated light emitted on photostimulation is detected photoelectrically and transformed into sequential electrical signals.

The typical basic constituents of such X-ray imaging system operating with a photostimulable storage phosphor are an imaging sensor containing said phosphor in particulate form normally in a plate or panel, which temporarily stores the X-ray energy pattern, a light source ( e.g. a scanning laser beam) for photostimulation, a photo-electronic light detector providing analogue signals that are converted subsequently into digital time-series signals, normally a digital image processor which manipulates the image digitally, a signal recorder, e.g. magnetic disk or tape, and an image recorder for modulated light exposure of a photographic film or an electronic signal display unit, e.g. cathode-ray tube. A survey of lasers useful in the read-out of photostimulable latent fluorescent images is given in the periodical Research Disclosure December 1989, item 308117.

As described in published EP-A 0 007 105 in order to obtain a high signal to noise ratio (S/N) the stimulating rays must be prevented from entering the detection means of the stimulated fluorescent light emitted by the phosphor because the ratio of the energy of stimulating light to the energy of said fluorescent light emitted on photostimulation is as high as 104:1 to 106:1 so that the detection means which is also sensible to the wavelength of the stimulating light will be blinded by the overwhelming power of the stimulating light (laser light), this light will make it impossible to obtain a noise free fluorescent light image. In order to improve the S/N ratio it has been proposed to use a filter which cuts the light having wavelengths outside the emission spectrum of the phosphor. Such can be done sufficiently effectively with cut-off or band pass colour filters or holographic filters known in the art when the maximum wavelength of the spectrum of the fluorescent light emission and the wavelength of the stimulating light are sufficiently separated. Therefore the use of certain phosphors in the storage plate is restricted to combinations with certain stimulating light sources.
Moreover certain kinds of phosphors can not be used at all because stimulation wavelength and stimulated light wavelength of the phosphor are not sufficiently separated so no adequate colour filter can be provided to separate the wavelengths.
In EP 598 949 the readout optics are situated close to the scanning line in order to spatially separate stimulating and stimulated light. Due to glare and reflections an optimal separation is impossible. In US 4876 452 several pulsed laser diodes are used to obtain a continuous high intensity laser spot scanning the phosphor plate.

Additional problems arise in combination with a readout system which uses spot scanning exposure of the phosphor plate. Each pixel is stimulated subsequently by the scanning system. Light collecting optics and photodetector measure the light emitted by each pixel. When stimulated, the storage phosphors exhibit a certain afterglow so that emission of stimulated light is still present when the following pixel is stimulated. Therefore a part of the fluorescence makes a contribution to the signal level of the following pixel. This results in a so called flare phenomenon whereby bright spots exhibiting a bright fluorescence tend to smear and mask image signals of low fluorescent pixels following these spots which is a cause of a degraded image quality.

Other systems for readout of a stimulable phosphor plate do not use a scanning laser beam for photostimulation. Such a system is described in EP-A 167 747. The radiation read-out apparatus comprises a stimulating ray source constituted by many point light sources for sequentially emitting stimulating rays onto a portion of a stimulable phosphor sheet carrying a radiation image stored therein. A line sensor constituted by many solid state photoelectric conversion devices extends over the length of the portion of the stimulable phosphor sheet linearly exposed to the stimulating rays. Light emitted by the exposed portion of the stimulable phosphor sheet is received and photoelectrically converted by the solid state photoelectric conversion devices. The stimulating ray source and the line sensor are moved with respect to the stimulable phosphor sheet in a main scanning direction normal to the array of the solid state photoelectric conversion devices thus sweeping the entire phosphor sheet. A resembling system can be found in US 4 880 987 using an overall stimulating linear light source and separate photodetectors.

In this type of device the same problems arise in obtaining a good signal to noise ratio. In order to obtain a sharp image, a close contact between the phosphor sheet and the photoelectric conversion devices is necessary. On the other hand it is necessary to prevent the stimulating light from reaching the photoelectric conversion devices. Therefore one has to include a colour filter in between the phosphor sheet and the detector array. It is physically impossible to fulfil both needs at the same time in a satisfying manner. A thin filter results in a high sharpness but allows too much of the stimulating light to reach the detector elements while a thick filter provides good filtering but due to the enhanced distance from the phosphor to the detector the sharpness is degraded due to flare phenomena because the light from neighbouring pixels can reach the detector elements.

As in the laser scanner system the application of this readout method is restricted to certain phosphors/light source combinations and likewise certain phosphors cannot be used at all.

The same restrictions apply to a readout system where a whole area of the phosphor sheet is stimulated at the same time and readout is done using a matrix image sensor such as a two-dimensional CCD.

### OBJECTS OF THE INVENTION

It is an object of the invention to provide a method for readout of a stored energy releasing phosphor plate having a high signal to noise ratio and enabling the use of various phosphors and stimulating light sources.

Further objects will become apparent from the description hereafter.

### SUMMARY OF THE INVENTION

To achieve the above object, the present invention provides a method of obtaining an electrical representation of a radiation image comprising the steps of :
- exposing a stimulable phosphor plate comprising a stimulable phosphor, having a stimulating wavelength range, to the radiation image, thereby recording the radiation image on the phosphor plate,
- stimulating the stimulable phosphor plate with stimulating light having a wavelength within the stimulating wavelength range of the stimulable phosphor during at least one stimulating time period causing the stimulable phosphor sheet to emit stimulated light ,
- detecting the stimulated light emitted by the stimulable phosphor plate by use of a photoelectric conversion means during at least one readout time period,
- converting the detected stimulated light into the electrical signal representation,
characterised in that at least one of the readout time periods lies at least partially outside the stimulation time period(s) at which the stimulable phosphor sheet is stimulated by the stimulating light.

This method is advantageous in that during parts of the readout periods which lie outside the predetermined stimulation periods, no stimulated light is present so there is no adverse effect on the readout signal. In this way a higher signal to noise ratio can be obtained.

In a preferred embodiment of this method at least one of the readout time period(s) at which the photoelectric conversion means detects the stimulated light lies totally outside the stimulation time periods.

It is even more advantageous that all the stimulation periods and readout periods are totally separated. As the photoelectric conversion means detect only stimulated light during the readout periods, the characteristics of the stimulating light no longer affect the readout signal. When using this so called time resolving mode, phosphors can be used which could not be used before. Even phosphors where the stimulating wavelength lies within the emission spectrum of the phosphor can be used. The invention also allows the use of certain phosphor and light source combinations which could not be used before.
Because no stimulating light is present during readout there is no need to use color filters devices or holographic filters to prevent the stimulating light reaching the detector. Therefor it is possible to put the readout detector in very close contact with the phosphor plate. This results in a further enhancement in sharpness and reduction of flare phenomena.

It is advantageous that the method provides stimulation of the stimulable phosphor plate using pulsed light.

In one of the embodiments of the invention one stimulating light pulse is given in the beginning of the readout cycle for the given pixel,line or area. After the stimulation light pulse has ended, detection of the stimulated light is started.

After this period a new pixel, line or area of the phosphor is subjected to the readout cycle.

A further advantage of the time resolved method is less flare problems because even if the fluorescence of the previous pixel, line or area has not completely ended there is no adverse effect on the following pixel, line or area because during the stimulating pulse no fluorescence is measured.

When during the readout period of one pixel, line or area several stimulation pulses and readout periods are provided, the individual light pulses may have a lower energy level and still provide the stimulating energy required for image readout. This allows the use of light sources only capable of such low energy pulses. This provides a further advantage of the readout method

In an embodiment the method uses a laser scanner for providing said stimulation of the phosphor plate for readout.

Another embodiment the detection of the stimulated light is done using a line sensor.

In a further embodiment of the method the detection of the stimulated light is done using a two dimensional matrix sensor.

### BRIEF DESCRIPTION OF THE DRAWINGS

**Fig. 1** shows a laser scanner capable of using the method according to the invention.
**Fig. 2A** shows the a first time diagram of the stimulation and fluorescence during the readout cycle.
**Fig. 2B** shows a second time diagram of the stimulation and fluorescence during the readout cycle.
**Fig. 3** shows a readout arrangement using a line sensor.
**Fig. 4** depicts a readout arrangement using a two-dimensional matrix sensor.

### DETAILED DESCRIPTION OF THE INVENTION

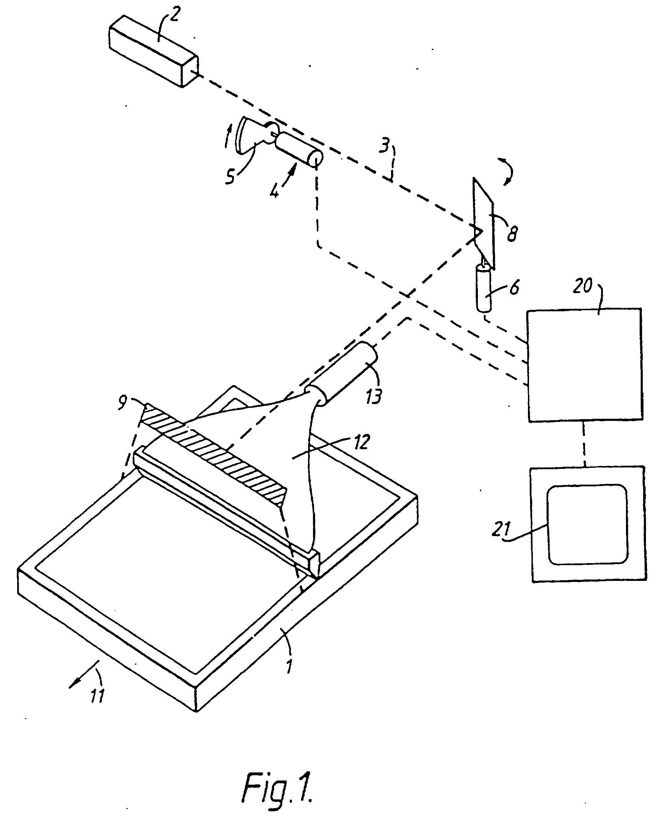

In Figure 1. a stimulable phosphor sheet read-out station wherein a readout method according to the present invention can be applied is shown.

After a stimulable phosphor sheet 1 is exposed to radiation, such as to X-rays, passing through an object to have a radiation image stored thereon, it is fed into the read-out station.

A laser beam 3, having a wavelength of 633 nm, emitted from a helium-neon laser source 2, is directed towards a galvanometer mirror 8. Drive means 6 cause the galvanometer mirror 8 to reciprocate in a triangular wave pattern. A light chopper 4, including a rotating disc segment 5, is positioned to enable the disc segment 5 to interrupt the laser beam pathway 3 during the galvanometer retrace step. The disc segment 5 is made for example of aluminium-coated glass having a light transmissivity of 1% at 633 nm wavelength. The disc segment 5 represents 72° of a circle, to match that proportion of the scanning cycle represented by the retrace step.

Various laser beam focusing devices, known in the art, not shown in the drawings, may be applied ensuring a uniform beam diameter during scanning of the beam on the phosphor sheet 1 and also ensuring that the uniform angular velocity of the reciprocating mirror 8 results in the laser spot travelling across the phosphor sheet 1 at a uniform linear speed. The laser beam 3 is one-dimensionally deflected by the galvanometer mirror 8 and by a plane reflection mirror 9 onto the phosphor sheet 1. The arrangement is such that a spot of laser light, having a full width at half maximum of 60 µm scans the phosphor sheet at a main scanning speed of 35 m/sec, and a retrace speed of 300 m/sec. Transport means not shown are provided to transport the sheet at a uniform speed of 12.5 mm/sec in the direction of the arrow 11, to enable the whole sheet to be scanned in a uniform manner.

Positioned close to, but behind the scanning line of the laser beam on the phosphor sheet 1, is a light guide 12 which receives light emitted from the phosphor sheet 1 but is shielded from direct exposure to the laser beam. The output end of the light guide 12 is positioned adjacent a photo-detector 13, which produces an electrical signal dependent upon the light intensity falling thereon. In order to detect the low intensity fluorescence a photomultiplier is used as photo-detector 13.

Suitable electrical connections are made to pass the output signal from the photo-detector 13 to a computer 20, processing the output signal, controlling the light chopper 4 and the galvanometer mirror drive 6 and which is additionally connected to a display unit 21, such as a VDU screen. Alternatively or additionally the output of the computer 20 is used to produce a permanent record of the raster image.

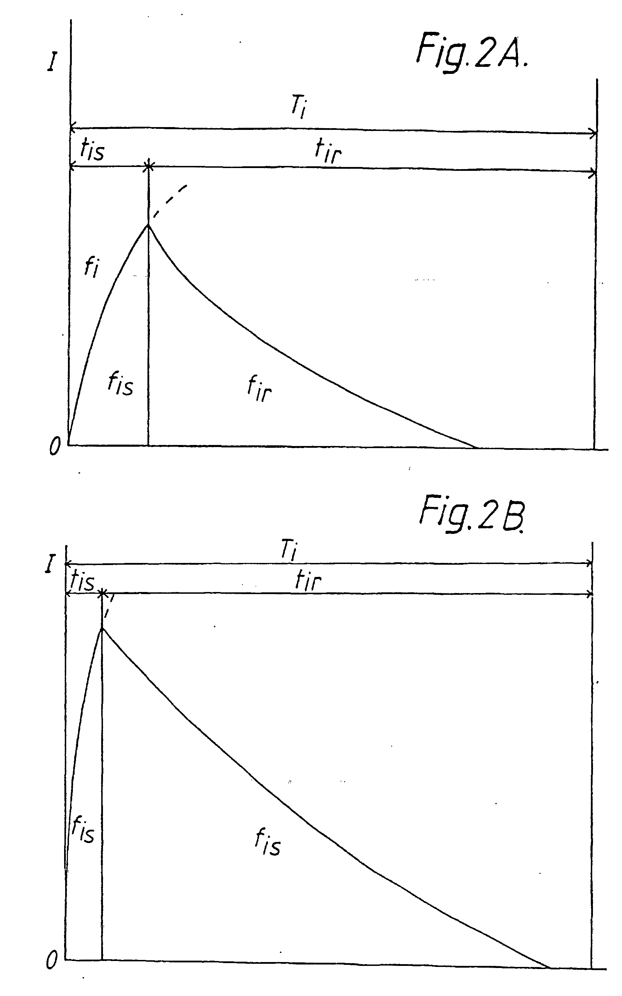

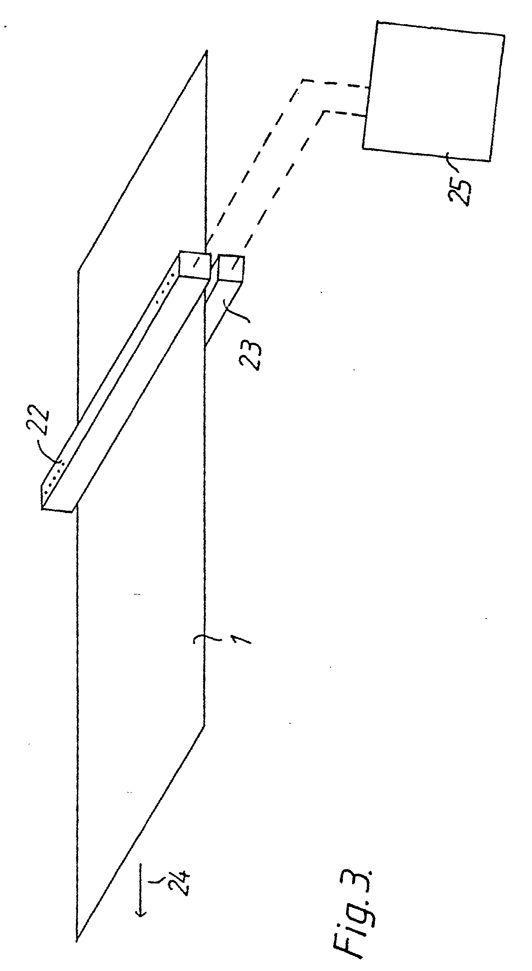

Further description is given in accordance with Fig. 2A showing a time diagram of a readout cycle.

According to the present invention readout of the stimulable phosphor sheet is done in a time resolved mode, i.e. during the readout time **Ti** for each image pixel (determined by the duty cycle which may be about 4 to 5 µs) a stimulating light pulse Pi is given by the scanning laser beam to the pixel location during a predetermined short time period **t**_{**is**} (e.g.0.5ns - 1µs) in relation to the response of the decay time of the phosphor.

A light pulse can be obtained in very different ways. This can be done using a continuous light source which is chopped or which is modulated using an electro-optical light modulator. In other embodiments use can be made of pulsed light sources. Certain laser sources in particular are very suited for pulsed operation For example a semiconductor laser or led light source can be pulsed directly by modulating the electric current. Other lasers such as the Argon and Krypton lasers can also be modulated with an acousto-optic modulator. The pulse time of the frequency doubled Nd:YAG laser is preferably in the range of 1% to 30% of the decay time of the phosphor luminescence. The time between two pulses is preferably in the range of 1 to 3 times the decay time of the phosphor luminescence.

During stimulation of the phosphor, fluorescence **fi** is build-up in accordance with the image content while it diminishes till zero when stimulation is stopped. Fluorescence is detected during time period **t**_{**ir**} using above mentioned light guide and photo-detector system.

In this first embodiment only output signals of induced fluorescence detected in period **t**_{**ir**} falling outside the stimulation period are kept as valid readout values. This can be done by making the detection circuit insensitive during light pulses. It is possible to switch off the high voltage source of the electron multiplier circuit. When the detection circuit is not switched off, the output signal received by the photomultiplier during stimulation can be discarded by the signal processing unit.
In either way it is impossible for the stimulating light to influence the final image obtained by the computer.

It is clear that stimulation light and stimulated light need not to be separated by use of a optical filter, but in fact they are separated in time making the use of an optical filter obsolete.
By using this readout method a part (e.g. about 20%) of the duty cycle reserved for each pixel is lost for readout, however the readout efficiency is much higher by leaving out the optical filter and the signal to noise ratio is high due to absence of stimulating light during signal readout. The 20% loss in readout time causes no great signal loss because the contribution of the fluorescence which could be detected during stimulation **f**_{**is**} is very small compared to the amount of fluorescence **f**_{**ir**} present after the stimulation pulse . When using very intense short light pulses the fluorescence emitted during stimulation can be neglected compared to the measured fluorescence during the following readout period. A time diagram of the fluorescence using such a short light pulse is given in Fig. 2B.

It is clear that this time resolving method provides a further advantage because the phosphor can be stimulated with light having wavelengths shorter, close or equal to the wavelengths of the emitted light even if no optical filter can be found to separate them. It is even possible to use stimulating light sources which lie within the stimulated light spectrum of the phosphor in use. Therefore it is possible to use phosphors, which have favourable characteristics, that could not be used before.

Loss in absolute readout period due to the use of the time resolved mode can be compensated by using a brighter light source causing a stronger fluorescence.

Normally a single light pulse is given for each pixel during a readout cycle but depending upon the characteristics of the phosphor used in the phosphor plate it is possible to give successive light pulses while valid signal values are detected in between the pulses. A advantage of this method is that lasers can be used which are only capable of low energy pulses. After each low energy pulse only a small portion of the fluorescence is released and measured while during the readout time of one pixel several pulse/readout operation are executed. The values obtained during the different readout periods for each pixel can be processed to obtain a single value for each pixel. This can be done by the processing unit by simply adding the different readout values. Other signal processing systems known in the art can be used, such an other system makes use of e.g. averaging.

It can be understood that a laser scanner can also use other deflection systems such as a polygon mirror or electro-optical device for the purpose of light deflection. When using a rotating polygon mirror there is no need to use a light chopper with rotating disc segment because in a polygon scanning system there is no retrace of the scanning beam.

As can be understood it is not necessary for the stimulation and readout period to be totally separated in time. When the stimulation period slightly overlaps the readout period the advantage of less stimulation light reaching the detector is still present. In this readout method filter means to separate stimulation and stimulated light may be necessary.

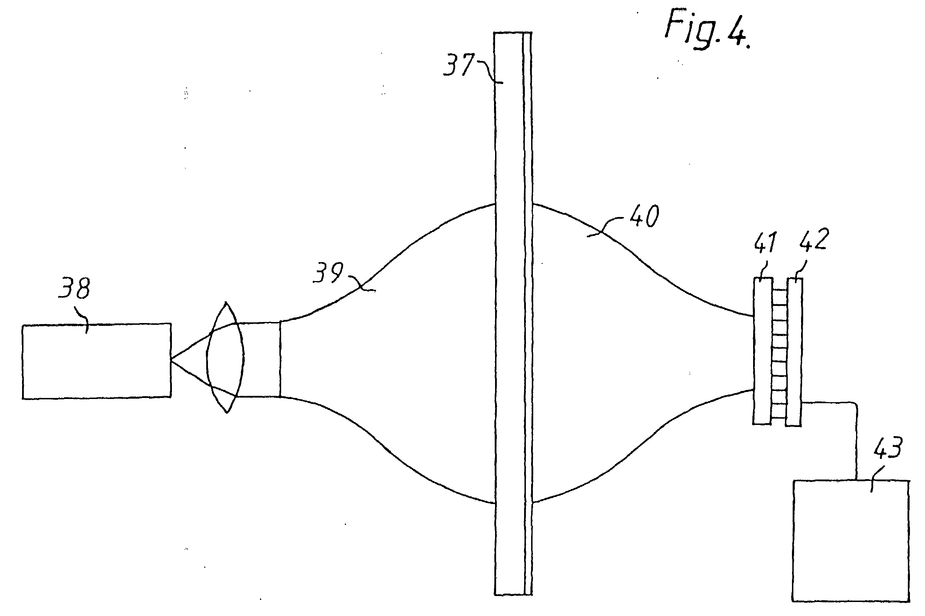

Fig. 3 shows a second embodiment of a readout station using readout method according to the present invention. After exposure to e.g. X-rays the photostimulable phosphor sheet 1 is fed to the readout station. In the readout station a linear laser array line-wise stimulates the stimulable phosphor sheet 1.

The line-wise stimulation of the phosphor plate 1 can be done by use of several light sources. The light source itself can be linear shaped or a suitable optical arrangement can be used to obtain a light line on the phosphor plate. This can be done by use of e.g. fibre optics which can convert the light of a point-like light source into an elongated light line for stimulating the phosphor. The stimulating light source providing the stimulating light for stimulating the phosphor can be any lamp, such as Tungsten Halogen Lamps, Mercury Lamps, Xenon Lamps and Sodium Lamps. This light source can also be an array of LED's emitting blue (467nm), pure green (557nm), green (565nm), yellow (586nm), orange (610nm), red (660nm) or infrared (850nm) light. The light source can also be a laser such as Argon-ion, Krypton, frequency doubled and non frequency doubled Nd:YAG and diode lasers.

The readout of the stimulated fluorescence is done by use of a photoconversion element which is a line sensor 23 comprising many solid state photosensitive elements and where the sensor is positioned near the line of stimulation. Stimulating light source 22 and the readout device 23 can be placed at the same side of the phosphor or at the opposite side. One such readout device is a linear CCD array. The fluorescence causes charge build-up in the CCD elements which, after a suitable integration time, is clocked out to a analog to digital convertor. After readout of one line the phosphor or the readout arrangement is transported one line further by a transporting mechanism (not shown) in the direction of arrow 24 and a new readout cycle is started. Other linear sensors can be used. One such sensor is a elongated photomultiplier having a line-like entrance window. Instead of a light line scanning the phosphor plate a dot scanning device such as a laser scanner can also be used.

As readout is done in time-resolved mode it is necessary that the light source can be pulsed. Therefore it is advantageous to use for e.g. a linear array of laser diodes or leds which can be pulsed directly by modulating the driving current.

For readout cycle of one line at least one pulse of predetermined length is given to stimulate the phosphor plate. After each pulse a readout period is started. The charge build-up during the stimulating light pulse is clocked out of the CCD afterwards and is not used for image detection. Immediately after this the CCD is reset at the beginning of the readout period and a new charge build-up phase is started to detect the stimulated light which is still present because of the decay of the phosphor. The detection of the stimulated light is stopped just before a new readout cycle is started for a new line.
When the intensity of the emitted light becomes too small during readout of one line the sensed charges can be readout and a new stimulating pulse can be given to the same line whereafter a new charge detecting cycle for the same area is started. Doing so, a whole burst of stimulating pulses for readout of one line is given while only the charges build-up in the CCD in between the light pulses is readout. In this way a better readout of the stored image is obtained.

The charges readout in between the stimulating pulses are supplied to a signal processing section 25 where a further processing can take place. One such method is the averaging of the different signals obtained resulting in a better signal to noise ratio.

It is not necessary that the readout period falls totally outside the predetermined stimulating periods. Although the use of optical filters could be necessary to separate the stimulating and stimulated light it is possible to provide a certain overlap of the stimulating pulse and the readout period. By doing this the influence of she stimulating light is also less than when using a system having a continuous readout and/or continuous stimulation. To obtain a good signal to noise ratio in this system detection of stimulation light by the CCD has to be avoided. Therefore colour filter means are preferably to be provided to prevent the stimulation light to reach the CCD. The colour filter means is disposed in the path between the plate and the CCD and has a certain thickness which affects the sharpness of the image. Therefore it is preferable that the colour filter is as thin as possible. A thin gelatine filter is preferred while it provides no adverse effect on the sharpness and has good filtering properties.

Fig. 4. shows another embodiment according to the present invention. The photoelectric conversion means used in this embodiment is a two dimensional CCD sensor. In the light sensitive elements of the CCD charge build-up occurs relative to the received fluorescence light. Alternatively other two-dimensional sensors can be used. In this way a large number of pixels can be readout during the same readout cycle.

A stored energy releasing phosphor plate 37 comprising a LiTaO₃:Tb³⁺ phosphor as described in european application EP 597 311 which is previously exposed in a x-ray apparatus (not shown) is readout in the readout apparatus in a time resolving mode. The storage phosphor plate 37 is stimulated by a frequency doubled Nd:YAG laser (532nm) 38.

A Fibre Optic Plate 39 guiding the stimulating light to the phosphor plate 37 is spreading the light of the stimulating light source. The Fibre Optic Plate 39 is placed in direct contact with the phosphor layer 37 so that only these pixels are stimulated which will be read out. The light emitting ends of the fibre optic are evenly distributed facing the phosphor plate . Therefore an equal light intensity is obtained during stimulation so there is no need for shading correction of the sensed signal in the image processing section.

At the other side of the phosphor plate the Fibre Optic Plate 40 is in close contact with the stimulated area of the phosphor layer to obtain a good resolution and a good readout efficiency. The apparatus employing the method thus works in a transmittance mode, i.e. while the phosphor plate is exposed to stimulating light at one side, the detection of stimulated light is done at the opposite side. In this embodiment the Fibre Optic Plate guiding the stimulated light is tapered so that the image is reduced in size. A reduction factor of 5:1 can be obtained. The collection efficiency of the Fibre Optic Plate itself can be as high as 80 %. There is virtually no loss of light between the phosphor layer and the Fibre Optic Plate and between the Fibre Optic Plate and the CCD because these elements are in direct contact. The collection efficiency is about factor 4 higher than in a system using a laser scanner normally used for readout of storage phosphor plates.

A shutter or a rotating wheel with a slit can be used to make the light source emit intermittently. The LED-array and diode laser can be pulsed directly by modulating the electric current. The Argon and Krypton lasers can also be modulated with an acousto-optic modulator. It is clear that the used light sources are not restricted to diffraction limited light sources which is a further advantage of the system. The pulse time of the frequency doubled Nd:YAG laser is preferably in the range of 1% to 30% of the decay time of the phosphor luminescence. The time between two pulses is preferably in the range of 1 to 3 times the decay time of the phosphor luminescence.

The CCD 41 used in this embodiment is of a two-dimensional type. This means the photosensitive sites of the CCD form a matrix structure. In a first step the charges are accumulated in the elements wherein the charges correspond to the sensed stimulated light intensity of a fixed position on the phosphor plate. The readout of the charges out of the CCD can be done in a very short time. The charges are clocked out of the light sensitive area and are converted to the image signal. The CCD can also be of the type comprising a transfer buffer 42. In this CCD sensor the charges are (simultaneously) clocked into the light insensitive transfer buffer. The readout of the charges out of the buffer can be conducted in a later stadium. During this readout phase the CCD need not to be kept stationary.

By using the tapered fibre optics the total area that can be read-out simultaneously can be made larger (e.g.50 x 50 mm). Several pixels are read-out simultaneously and transferring the data from the CCD to the signal processing section 43 for image processing takes only a few milliseconds. This ensures a high throughput and allows the use of a photostimulable phosphor having a decay time in the range of 1 µs to 300 ms without loss of resolution as there is no movement of the CCD relative to the plate.

In the time resolving mode the charge build-up during the stimulating light pulse is clocked out of the CCD afterwards and is not used for image detection. Immediately after this the CCD is reset and starts a new charge build-up phase to detect the stimulated light which is still present because of the decay of the phosphor.

When the intensity of the emitted light becomes too small the sensed charges can be readout and a new stimulating pulse can be given whereafter a new charge detecting cycle for the same area is started. Doing so, a whole burst of stimulating pulses is given while only the charges build-up in the CCD in between the light pulses is readout.

It is clear that the same advantages as mentioned in the other embodiments still exist because the phosphor can be stimulated with light having wavelengths shorter, close or equal to the wavelengths of the emitted light even if no optical filter can be found to separate them. This problem is solved by measuring the emitted light immediately after turning off the stimulation light.

The charges readout between the stimulating pulses are supplied to a signal processing section where a further processing can take place. One such method is the averaging of the different signals obtained resulting in a better signal to noise ratio.

After signal acquisition of one area the phosphor plate 37 or the readout arrangement is moved so that the next area can be read out. The stimulating light source is put off during movement. A new charge build-up/readout step is started at a new position after the photosensitive area of the CCD has been cleared by binning the charges out of the CCD.

After the whole plate is read out, the image signals are combined by the signal processing section. In order not to lose information at the seams of the combined image, it may be advantageous to make the irradiated regions slightly overlap. The pixels that are read out twice give the information for the computer to adjust the position of every area. The final result is an electronic representation of the stored radiation image. When the total area of the phosphor plate can be imaged onto the CCD the plate their is no need to move the light source and CCD. It is obvious that by using several two dimensional detectors (CCDs) larger areas can be readout at the same time.

## Claims

1. Method of obtaining an electrical representation of a radiation image comprising the steps of :
- exposing a stimulable phosphor plate comprising a stimulable phosphor having a stimulating wavelength range to said radiation image, thereby recording said radiation image on said phosphor plate,
- stimulating said stimulable phosphor plate with stimulating light having a wavelength within said stimulating wavelength range of said stimulable phosphor during at least one stimulation time period causing said stimulable phosphor sheet to emit stimulated light ,
- detecting said stimulated light emitted by said stimulable phosphor plate by use of a photoelectric conversion means during at least one readout time period,
- converting the detected stimulated light into said electrical signal representation,
**characterised in that** at least one of said readout time periods lies at least partially outside said stimulation time period(s).

2. Method according to claim 1 wherein at least one of said readout time period(s) lies totally outside said stimulation time periods.

3. Method according to any of the preceding claims, wherein said stimulation of said stimulable phosphor plate is done by pulsed light.

4. Method according to any of the preceding claims wherein said stimulation of said phosphor plate is done using a laser scanner.

5. Method according to any of the preceding claims where said photoelectric conversion means is a line sensor.

6. Method according to any of claims 1 to 4 where said photoelectric conversion means is a two dimensional matrix sensor.

7. Method according claim 1 where said photoelectric conversion means is a CCD sensor.

## Patentansprüche

1. Verfahren zum Erhalten einer elektrischen Darstellung eines Strahlungsbildes, umfassend die folgenden Schritte:
- Belichten einer stimulierbaren Phosphorplatte, welche ein stimulierbares Phosphor mit einem stimulierenden Wellenlängenbereich umfasst, mit dem Strahlungsbild und dadurch Aufzeichnen des Strahlungsbildes auf der Phosphorplatte,
- Stimulieren der stimulierbaren Phosphorplatte mit stimulierendem Licht mit einer Wellenlänge innerhalb des stimulierenden Wellenlängenbereichs des stimulierbaren Phosphors während wenigstens einer Stimulationszeitspanne und Bewirken, dass die stimulierbare Phosphorfolie stimuliertes Licht ausstrahlt.
- Erfassen des stimulierten Lichtes, welches durch die stimulierbare Phosphorplatte ausgestrahlt wurde, durch Verwendung eines fotoelektrischen Umwandlungsmittels während wenigstens einer Ablesungszeitspanne,
- Umwandeln des erfassten stimulierten Lichtes in die elektrische Signaldarstellung,
**dadurch gekennzeichnet, dass** wenigstens eine der Ablesungszeitspannen wenigstens teilweise außerhalb der Stimulationszeitspanne(n) liegt.

2. Verfahren nach Anspruch 1, wobei wenigstens eine der Ablesungszeitspanne(n) vollkommen außerhalb der Stimulationszeitspannen liegt.

3. Verfahren nach einem der vorhergehenden Ansprüche, wobei die Stimulation der stimulierbaren Phosphorplatte durch Impulslicht erfolgt.

4. Verfahren nach einem der vorhergehenden Ansprüche, wobei die Stimulation der Phosphorplatte durch Verwenden eines Laserscanners erfolgt.

5. Verfahren nach einem der vorhergehenden Ansprüche, wobei das fotoelektrische Umwandlungsmittel ein Zeilensensor ist.

6. Verfahren nach einem der Ansprüche 1 bis 4, wobei das fotoelektrische Umwandlungsmittel ein zweidimensionaler Matrixsensor ist.

7. Verfahren nach Anspruch 1, wobei das fotoelektrische Umwandlungsmittel ein CCD-Sensor ist.

## Revendications

1. Procédé d'obtention d'une représentation électrique d'une image de rayonnement comprenant les étapes de :
- exposition d'une plaque de luminophore stimulable comprenant un luminophore stimulable, ayant une gamme de longueurs d'onde stimulantes, à ladite image de rayonnement, enregistrant ainsi ladite image de rayonnement sur ladite plaque de luminophore,
- stimulation de ladite plaque de luminophore stimulable avec une lumière stimulante ayant une longueur d'onde dans ladite gamme de longueurs d'onde stimulantes dudit luminophore stimulable durant au moins une période de temps de stimulation forçant ladite feuille de luminophore stimulable à émettre une lumière stimulée,
- détection de ladite lumière stimulée émise par ladite plaque de luminophore stimulable en utilisant un moyen de conversion photoélectrique durant au moins une période de temps de lecture,
- conversion de la lumière stimulée détectée en ladite représentation de signal électrique,
**caractérisé en ce qu'**au moins l'une desdites périodes de temps de lecture se situe au moins partiellement en dehors de ladite ou desdites périodes de temps de stimulation auxquelles la feuille de luminophore stimulable est stimulée par la lumière stimulante.

2. Procédé selon la revendication 1, dans lequel au moins l'une de ladite/desdites périodes de temps de lecture repose totalement en dehors desdites périodes de stimulation.

3. Procédé selon l'une quelconque des revendications précédentes, dans lequel la stimulation de la plaque de luminophore stimulable est effectuée au moyen d'une lumière pulsée.

4. Procédé selon l'une quelconque des revendications précédentes, dans lequel la stimulation de la plaque de luminophore stimulable est effectuée par un scanner à laser.

5. Procédé selon l'une quelconque des revendications précédentes, dans lequel ledit moyen de conversion photoélectrique est un capteur de ligne.

6. Procédé selon l'une quelconque des revendications 1 à 4, dans lequel ledit moyen de conversion photoélectrique est un capteur matriciel bidimensionnel.

7. Procédé selon la revendication 1, dans lequel ledit moyen de conversion photoélectrique est un capteur CCD.
